# EUROPEAN PATENT SPECIFICATION

(11) **EP 1 377 470 B1**
(45) Date of publication and mention of the grant of the patent: **01.10.2008**
(21) Application number: 02722979.8
(22) Date of filing: 12.04.2002
(51) Int. Cl.: B60G 15/07, F16F 9/54, F16F 9/32, B60T 1/06

(54) **SHOCK ABSORBER MODULE**
STOSSDÄMPFERMODUL
MODULE AMORTISSEUR

(30) Priority: 12.04.2001 NL 1017842
(43) Date of publication of application: 07.01.2004
(73) Proprietor: AB SKF, 415 50 Göteborg (SE)
(72) Inventor: VISSERS, Carl, NL-5275 BT Den Dungen (NL); ZWARTS, Jacobus, NL-3438 VA Nieuwegein (NL); DE VRIES, Alexander, Jan, Carel, NL-4003 KA Tiel (NL); KAPAAN, Hendrikus, Jan, NL-3435 DM Nieuwegein (NL)
(74) Representative: van Westenbrugge, Andries
(86) International application number: PCT/NL2002/000242
(87) International publication number: WO 2002/083438

(56) References cited:
- EP-A- 0 477 645
- EP-A- 1 081 019
- FR-A- 2 472 487
- GB-A- 2 026 404
- US-A- 4 274 654
- US-A- 4 491 340
- US-A- 5 228 717
- US-A- 5 366 233

## Description

The invention is related to a shock absorber module, comprising a shock absorber having a cylindrical housing within which a piston has been movably accommodated, and a hub mounting comprising a mounting flange, connected thereto, wherein the hub mounting is carried by the cylindrical housing.

Such a shock absorber is disclosed in GB-A-2026404 and US-A-4274654. Said prior art shock absorber has a cylindrical housing and a hub mounting which are welded together.

The object of the invention is to provide a shock absorber module which is simple and cheap to manufacture. Said object is achieved in that the cylindrical housing and the hub mounting are formed together as a single unit from one piece of sheet metal.

The single piece of sheet metal from which the shock absorber module according to preferred embodiment of the invention is manufactured comprises a housing section which is bent into tubular shape, such that the edges of said housing section can be connected together by welding or cold forming.

The housing is transversely extended by means of a transverse arm which carries the hub mounting laterally with respect to the housing, said housing, transverse arm and hub mounting being formed as a single unit from one piece of sheet metal.

The transverse arm has integrated stiffening shapes, e.g. ribs and/or grooves. Said transverse arm gradually merges into the lower end of the housing by means of a transition piece, the shape of which is gradually changed from a tube form into a flat form.

The hub mounting comprises a flange provided with mounting means for mounting a hub bearing unit thereto. Said flange can be provided with mounting holes, and also with a central hole for accommodating the hub bearing unit.

Several variations are possible within the shock absorber module described before. For instance, the housing of the shock absorber may have at least two cylindrical sections of different diameters. According to the present invention, the shock absorber has an end cap provided with an opening for guiding a linearly moving shaft. Furthermore, the sheet metal of the cylindrical housing can have a thickness which differs from the thickness of the sheet metal of the hub mounting. The metal of the cylindrical housing may be different from the metal of the hub mounting.

The hub mounting carries means for fixing a brake bracket or brake calliper thereto. According to the invention the lower end of the cylindrical housing is closed by means of a plug. Said plug may carry a lever arm for connection to a torsion bar. The hub mounting carries fixation means for connecting a steering rod thereto.

The invention is furthermore related to a method of manufacturing the shock absorber module according to the invention. Said method comprises the steps of:
a) taking one piece of sheet metal having a housing section and a hub/flange section,
b) cold forming one piece of sheet metal to a round shape for the shock absorber section;
c) joining the ends of the round shape together by energy welding or cold forming;
d) cold and/or warm forming of the hub/flange section so as to form a hub mounting (5) comprising a mounting flange (24)
e) cold forming of bottom ball joint section or separate joining of a ball joint section by welding.

The piece of sheet metal may consist of a single unity, as of several parts welded together. Said parts may have the same of different thicknesses.

According to an alternative method, an extruded or weld tube section is partly cut open and flattened to form the sections for hub, flange and ball joint. Furthermore, it is not necessary to start off with a single piece of sheet metal. The method may therefore also comprise the step of joining of sheet metal parts by welding after which the above steps a, b, c, d are performed.

Also, a specific inner and/or outer surface finish for the tube section may be performed, e.g. in the case of applying a hydraulic shock absorber or of a sliding part of an electromechanical actuator.

The invention will now be described further with reference to an embodiment shown in the figures.
Fig. 1 shows an exploded view with the shock absorber module according to the invention.
Fig. 2 shows a bottom view.
Fig. 3 shows an exploded view from a different view angle.
Fig. 4 shows an assembled unit.

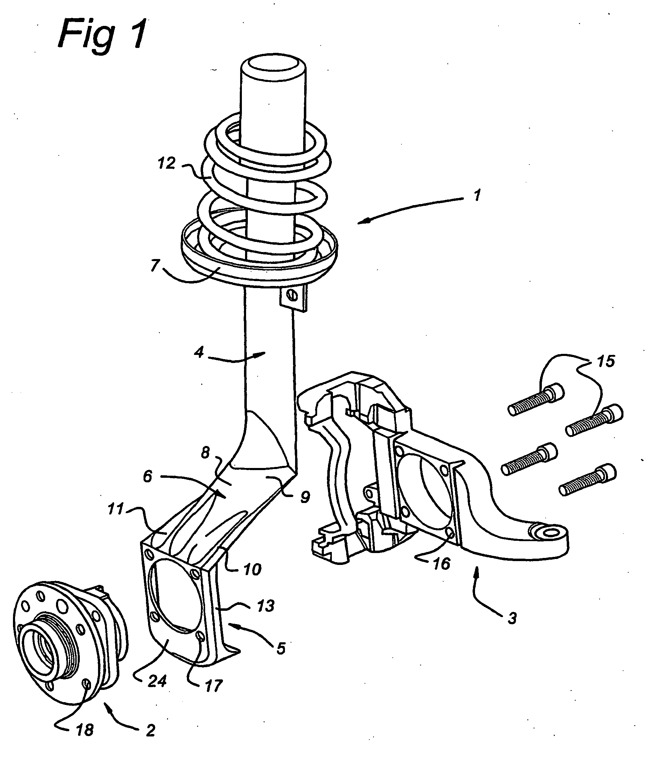

Fig. 1 shows the shock absorber module 1 according to the invention, a hub bearing unit 2, as well as a calliper unit 3. The shock absorber module comprises a cylindrical housing 4, as well as a mounting flange 5. The mounting flange 5 is connected to the housing 4 by means of a transversely extending arm 6. The housing 4, the arm 6 and the mounting flange 5 form one unit from a single piece of sheet metal.

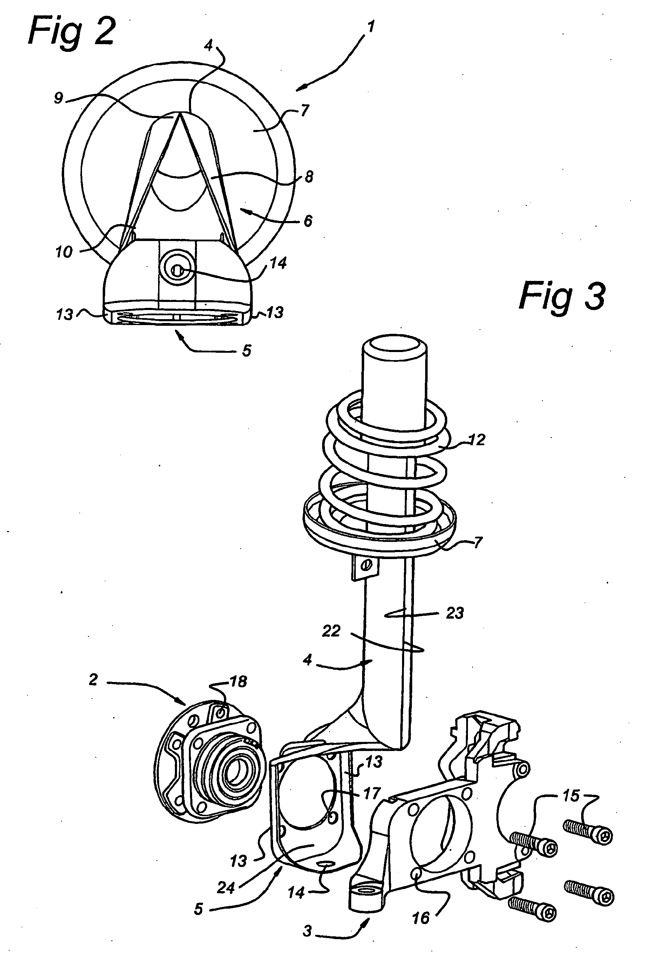

The bottom view of fig. 2 shows that the transverse arm gradually merges into the lower end of the housing 4 by means of a transition piece 8, the shape of which is gradually changed from a tube form 9 into a flat form 10. Furthermore, stiffening ribs 11 have been integrated in the transverse arm 6 as well. Onto the housing 4, a support plate 7 has been welded onto which the spring 12 is supported.

As shown in fig. 3, the mounting flange 24 has stiffening edges 13 which are bent over about 90°. At its lower end, the mounting flange is provided with a bottom ball joint means 14.

The shock absorber module 1 according to the invention can be assembled with the hub bearing unit 2 and the calliper means 3 in a simple and sturdy way by means of bolts 15, accommodated in corresponding holes 16, 17 and 18 in said components. The bolts 15 can be threaded in the screw threads provided in the holes 18.

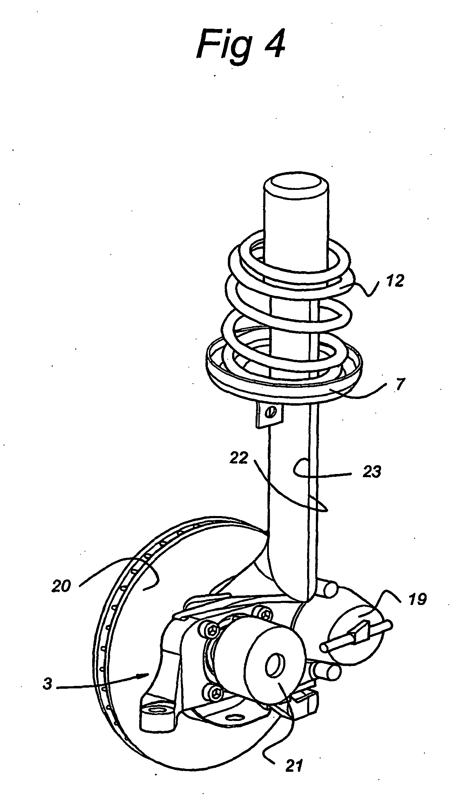

The assembly shown in fig. 4 has been equipped moreover with an electric brake actuator or hydraulic brake actuator 19, a brake disc 20 and a homokinetic coupling 21. The assembly can thus be mounted as a unit onto a vehicle carriage.

The cylindrical housing 4 is manufactured from a sheet housing section, which is bent into a cylindrical shape. The adjoining edges 22, 23 of said shape are welded together.

## Claims

1. Shock absorber module (1) comprising: a shock absorber having an end cap provided with an opening for guiding a linearly moving shaft and a cylindrical housing (4) the lower end of which is closed by means of a plug; and a hub mounting (5) comprising a mounting flange, connected thereto, wherein the hub mounting (5) is carried by the shock absorber cylindrical housing (4) and wherein the shock absorber cylindrical housing (4) and the hub mounting (5) are formed together as a single unit from one piece of sheet metal.

2. Module according to claim 1, wherein the cylindrical housing (4) consists of a housing section of the one piece of sheet metal, said housing section being formed into a tubular shape and the longitudinal edges (22, 23) of said housing section being welded together.

3. Module according to any of the preceding claims, wherein the housing (4) is laterally extended by means of a transverse arm (6) which carries the hub mounting (5) transversely with respect to the housing (4), said housing (4), transverse arm (6) and hub mounting (5) being formed as a single unit from one piece ofsheet metal.

4. Module according to claim 3, wherein the transverse arm has integrated stiffening shapes, e.g. ribs (11) and/or grooves.

5. Module according to claim 4, wherein the transverse arm (6) gradually merges into the lower end of the housing (4) by means of a transition piece (8), the shape of which is gradually changed from a tube form (9) into a flat form (10).

6. Module according to any of the preceding claims, wherein the hub mounting (5) comprises a flange (24) provided with mounting means (17) for mounting a hub bearing unit (2) thereto.

7. Module according to claim 6, wherein the flange (24) is provided with mounting holes (17).

8. Module according to claim 6 or 7, wherein the flange (24) is provided with an insert bearing housing, said housing being attached by welding or cold forming.

9. Module according to claim 7 or 8, wherein the flange (24) carries bottom ball joint means (14) at its lower end.

10. Module according to claim 7, 8 or 9, wherein the flange (24) is provided with stiffening edges (13) which merge into the transverse ann (6).

11. Module according to any of the preceding claims, wherein the housing (4) of the shock absorber has at least two cylindrical sections of different diameters.

12. Module according to any of the preceding claims, wherein the sheet metal of the cylindrical housing (4) has a thickness which differs from the thickness of the sheet metal of the hub mounting (5).

13. Module according to any of the preceding claims, wherein the metal of the cylindrical housing (4) is different from the metal of the hub mounting (5).

14. Module according to any of the preceding claims, wherein the hub mounting (5) carries means (17) for fixing a brake bracket or brake calliper (3) thereto.

15. Module according to any of the preceding claims, wherein the plug carries a lever arm for connection to a torsion bar.

16. Module according to claim 15, wherein the lever arm is of a hydraulic type or gas type.

17. Module according to claim 15, wherein the actuator is of an electromechanical type.

18. Module according to any of the preceding claims, wherein the hub mounting (5) carries fixation means for connecting a steering rod thereto.

19. Module according to claim 10 and any of claims 14-18, wherein the stiffening edges (13) engage a support beam which carries at least a brake bracket or brake calliper (3), a steering member or a bearing fixation means.

20. Method for manufacturing a shock absorber module according to any of claims 1 19, comprising the steps of:
a) cold forming a piece of sheet metal to a round shape for the shock absorber section;
b) joining the ends of the round shape together by energy welding or cold forming;
c) cold and/or warm forming of the hub/flange section;
d) cold forming of bottom ball joint section or separate joining of a ball joint sections by welding.

21. Method according to claim 20, comprising the step of using a piece of sheet metal consisting of welded parts of the same or different materials.

## Patentansprüche

1. Stoßdämpfermodul (1), umfassend: einen Stoßdämpfer mit einer Abschlusskappe, die mit einer Öffnung versehen ist, um einen sich linear bewegenden Schaft zu führen, und einem zylindrischen Gehäuse (4), dessen unteres Ende mittels eines Stopfens verschlossen ist; und eine Nabenbefestigung (5), die einen Befestigungsflansch umfasst, der mit dieser verbunden ist, wobei die Nabenbefestigung (5) von dem zylindrischen Gehäuse (4) des Stoßdämpfers getragen wird und wobei das zylindrische Gehäuse (4) des Stoßdämpfers und die Nabenbefestigung (5) gemeinsam als eine einzelne Einheit aus einem Blechstück gebildet sind.

2. Modul nach Anspruch 1, bei welchem das zylindrische Gehäuse (4) aus einem Gehäuseabschnitt des einstückigen Blechs besteht, und der Gehäuseabschnitt in einer röhrenförmigen Gestalt geformt ist und die Längsränder (22, 23) des Gehäuseabschnitts miteinander verschweißt sind.

3. Modul nach einem der vorhergehenden Ansprüche, bei welchem das Gehäuse (4) sich lateral mittels eines Querträgers (6) erstreckt, der die Nabenbefestigung (5) quer zum Gehäuse (4) trägt, wobei das Gehäuse (4), der Querträger (6) und die Nabenbefestigung (5) als eine einzelne Einheit aus einem Stück Blech gebildet sind.

4. Modul nach Anspruch 3, bei welchem der Querträger integrierte Versteifungsformen, z. B. Rippen (11) und/oder Rillen, aufweist.

5. Modul nach Anspruch 4, bei welchem der Querträger (6) sich graduell in das untere Ende des Gehäuses (4) vereinigt mittels eines Übergangsstücks (8), dessen Form sich graduell von der Röhrenform (9) in eine flache Form (10) verändert.

6. Modul nach einem der vorhergehenden Ansprüche, bei welchem die Nabenbefestigung (5) einen Flansch (24) umfasst, der mit einer Befestigungseinrichtung (17) versehen ist, um eine Lagereinheit einer Nabe (2) daran zu befestigen.

7. Modul nach Anspruch 6, bei welchem der Flansch (24) mit Befestigungslöchern (17) versehen ist.

8. Modul nach Anspruch 6 oder 7, bei welchem der Flansch (24) mit einem Einsatzlagergehäuse versehen ist, wobei das Gehäuse durch Schweißen oder Kaltformen angebracht ist.

9. Modul nach Anspruch 7 oder 8, bei welchem der Flansch (24) eine Bodenkugelgelenkeinrichtung (14) an seinem unteren Ende aufweist.

10. Modul nach Anspruch 7, 8 oder 9, bei welchem der Flansch (24) mit Versteifungskanten (13) versehen ist, die sich mit dem Querträger (6) vereinigen.

11. Modul nach einem der vorhergehenden Ansprüche, bei welchem das Gehäuse (4) des Stoßdämpfers wenigstens zwei zylindrische Abschnitte mit unterschiedlichen Durchmesser aufweist.

12. Modul nach einem der vorhergehenden Ansprüche, bei welchem das Blech des zylindrischen Gehäuses (4) eine Stärke aufweist, welche sich von der Stärke des Blechs der Nabenbefestigung (5) unterscheidet.

13. Modul nach einem der vorhergehenden Ansprüche, bei welchem das Metall des zylindrischen Gehäuses (4) unterschiedlich ist zu dem Metall der Nabenbefestigung (5).

14. Modul nach einem der vorhergehenden Ansprüche, bei welchem die Nabenbefestigung (5) eine Einrichtung (17) trägt, um daran einen Bremsenträger oder einen Bremssattel (3) zu fixieren.

15. Modul nach einem der vorhergehenden Ansprüche, bei welchem der Stopfen einen Hebelarm zum Verbinden mit einer Torsionsstange trägt.

16. Modul nach Anspruch 15, bei welchem der Hebelarm ein hydraulischer Typ oder ein Gas-Typ ist.

17. Modul nach Anspruch 15, bei welchem der Aktuator ein elektromechanischer Typ ist.

18. Modul nach einem der vorhergehenden Ansprüche, bei welchem die Nabenbefestigung (5) eine Fixierungseinrichtung trägt, um eine Lenkstange damit zu verbinden.

19. Modul nach Anspruch 10 und einem der Ansprüche 14 bis 18, wobei die Versteifungsränder (13) eine Halteschiene fassen, welche wenigstens einen Bremsenträger oder einen Bremssattel (3), ein Steuerelement oder eine Lagerfixierungseinrichtung trägt.

20. Verfahren zum Herstellen eines Stoßdämpfermoduls nach einem der Ansprüche 1 bis 19, das folgende Schritte umfasst:
a) Kaltformen eines Blechstücks in eine runde Form für den Stoßdämpferabschnitt;
b) Zusammenfügen der Enden der runden Form durch Schweißen mit Energie oder durch Kaltformen;
c) Kalt- und/oder Warmformen des Naben/Flansch-Abschnitts;
d) Kaltformen des Bodenkugelgelenkabschnittes oder separates Verbinden eines Kugelgelenkabschnitts durch Schweißen.

21. Verfahren nach Anspruch 20, das den Schritt zum Verwenden eines Blechstücks umfasst, das aus verschweißten Teilen aus gleichen oder unterschiedlichen Materialien besteht.

## Revendications

1. Module amortisseur (1) comprenant : un amortisseur ayant un capuchon d'extrémité doté d'une ouverture pour le guidage d'un arbre mobile linéairement et d'un boîtier (4) cylindrique dont l'extrémité inférieure est fermée au moyen d'un bouchon ; et un support de moyeu (5) comprenant une bride de fixation reliée à celui-ci, dans lequel le support de moyeu (5) est porté par le boîtier cylindrique (4) de l'amortisseur et dans lequel le boîtier cylindrique (4) de l'amortisseur et le support de moyeu (5) sont formés ensemble comme une seule unité d'une seule pièce en tôle.

2. Module selon la revendication 1, dans lequel le boîtier (4) cylindrique est composé d'une section de boîtier de la seule pièce en tôle, ladite section de boîtier étant formée en une forme tubulaire et les arêtes (22, 23) longitudinales de ladite section de boîtier étant soudées ensemble.

3. Module selon l'une quelconque des revendications précédentes, dans lequel le boîtier (4) est latéralement prolongé au moyen d'un bras transversal (6) qui porte le support de moyeu (5) transversalement au boîtier (4), ledit boîtier (4), ledit bras transversal (6) et ledit support de moyeu (5) étant formés comme une seule unité dans une seule pièce en tôle.

4. Module selon la revendication 3, dans lequel le bras transversal possède des formes de raidissement intégrées, par exemple des nervures (11) et/ou des rainures.

5. Module selon la revendication 4, dans lequel le bras transversal (6) se fond progressivement dans l'extrémité inférieure du boîtier (4) au moyen d'une pièce de transition (8), dont la forme passe progressivement d'une forme tubulaire (9) à une forme plane (10).

6. Module selon l'une quelconque des revendications précédentes, dans lequel le support de moyeu (5) comprend une bride (24) dotée de moyens de montage (17) pour le montage d'une unité formant palier de moyeu (2) sur celle-ci.

7. Module selon la revendication 6, dans lequel la bride (24) est dotée de trous de montage (17).

8. Module selon la revendication 6 ou 7, dans lequel la bride (24) est dotée d'un boîtier de palier en pièce rapporté, ledit boîtier étant fixé par soudage ou formage à froid.

9. Module selon la revendication 7 ou 8, dans lequel la bride (24) porte des moyens de joint à rotule inférieur (14) sur son extrémité inférieure.

10. Module selon la revendication 7, 8 ou 9, dans lequel la bride (24) est dotée d'arêtes de raidissement (13) qui se fondent dans le bras transversal (6).

11. Module selon l'une quelconque des revendications précédentes, dans lequel le boîtier (4) de l'amortisseur possède au moins deux sections cylindriques de diamètres différents.

12. Module selon l'une quelconque des revendications précédentes, dans lequel la tôle du boîtier (4) cylindrique possède une épaisseur qui diffère de l'épaisseur de la tôle du support de moyeu (5).

13. Module selon l'une quelconque des revendications précédentes, dans lequel le métal du boîtier (4) cylindrique est différent du métal du support de moyeu (5).

14. Module selon l'une quelconque des revendications précédentes, dans lequel le support de moyeu (5) porte des moyens (17) de fixation d'un support de frein ou étrier de frein (3) sur celui-ci.

15. Module selon l'une quelconque des revendications précédentes, dans lequel le bouchon porte un bras de levier pour la liaison à une barre de torsion.

16. Module selon la revendication 15, dans lequel le bras de levier est du type hydraulique ou du type pneumatique.

17. Module selon la revendication 15, dans lequel l'actionneur est du type électromécanique.

18. Module selon l'une quelconque des revendications précédentes, dans lequel le support de moyeu (5) porte des moyens de fixation pour relier une bielle de direction à celui-ci.

19. Module selon la revendication 10 et l'une quelconque des revendications 14 à 18, dans lequel les arêtes de raidissement (13) engagent une poutre de support qui porte au moins un support de frein ou un étrier de frein (3), un élément de direction ou un moyen de fixation de palier.

20. Procédé de fabrication d'un module amortisseur selon l'une quelconque des revendications 1 à 19, comprenant les étapes suivantes :
a) formage à froid d'une partie de tôle en une forme ronde pour la section d'amortisseur ;
b) assemblage des extrémités de la forme ronde par soudage à énergie ou formage à froid ;
c) formage à froid et/ou à chaud de la section de moyeu/bride ;
d) formage à froid de la section de joint à rotule inférieur ou assemblage séparé d'une section de joint à rotule par soudage.

21. Procédé selon la revendication 20, comprenant l'étape d'utilisation d'une pièce en tôle composée de parties soudées du même matériau ou de matériaux différents.
